Europäisches Patentamt

European Patent Office

Office européen des brevets

(19)

(11) EP 0 838 505 A1

(12) EUROPÄISCHE PATENTANMELDUNG

(43) Veröffentlichungstag:
29.04.1998 Patentblatt 1998/18

(51) Int. Cl.⁶: $C09D\ 5/02$, $C09D\ 7/12$

(21) Anmeldenummer: 97118137.5

(22) Anmeldetag: 18.10.1997

(84) Benannte Vertragsstaaten:
AT BE CH DE DK ES FI FR GB GR IE IT LI LU MC
NL PT SE

(30) Priorität: 26.10.1996 DE 19644548

(71) Anmelder:
Degussa Aktiengesellschaft
60311 Frankfurt (DE)

(72) Erfinder:
• Weise, Anneliese
  63486 Bruchköbel (DE)
• Scheffler, Jochen, Dr.
  63755 Alzenau (DE)

(54) **Dispersionsfarben**

(57)    Dispersionsfarbe, die neben anderen Bestandteilen Zeolith X enthält.

**Beschreibung**

Die Erfindung betrifft Dispersionsfarben.

Dispersionsfarben oder auch Kunststoffdispersionsfarben sind nach DIN 55945 ein aus Kunststoffdispersionen und Pigmenten hergestellter Beschichtungsstoff.

Gegenstand der Erfindung ist eine Dispersionsfarbe, welche dadurch gekennzeichnet ist, daß sie neben anderen Bestandteilen Zeolith X enthält.

Der Zeolith X wird auf bekannte Art und Weise in die Dispersionsfarbe eingearbeitet.

Zeolith X ist bekannt aus Donald W. Breck, Zeolite Molecular Sieves, Structure Chemistry and use, Verlag John Wiley (1974) Seite 176.

Die Dispersionsfarbe kann aus verschiedenen Polymeren bestehen.

Durch die Wahl der Monomere, der inneren oder äußeren Weichmachung, der Herstellungsbedingungen sowie der Emulgatoren bzw. Schutzkolloide werden wichtige Eigenschaften, wie z.B. Viskosität, Mindestfilmbildetemperatur, Verseifungs- und Witterungsbeständigkeit, Lagerstabilität, Teilchengröße und Pigmentbindevermögen, bestimmt.

Die wichtigsten Kunststoffdispersionen bestehen aus Polymeren des Vinylacetats, Vinylpropionats, Styrols und Acrylsäureester.

Polyvinylacetat gibt es mit äußerer Weichmachung als Copolymerisat mit z.B. Vinylester, Maleinaten, Fumaraten, Acrylaten oder Ethylen sowie als Terpolymerisate mit Ethylen und Vinylchlorid. Polyvinylacetat-Dispersionen haben gute Allroundeigenschaften. Die Terpolymerisate besitzen ein hohes Pigmentbindevermögen.

Polyvinylpropionat gibt es als Homopolymeres, das von sich aus schon sehr weich ist. Copolymerisate werden meist mit Acrylaten hergestellt. Die hervorstechendsten Eigenschaften sind eine hohe Witterungs- und Verseifungsbeständigkeit.

Styrol liegt meist mit innerer Weichmachung vor. Die gängigsten Copolymerisate basieren auf Acrylaten oder - in abnehmender Bedeutung - auf Butadien. Besonders die sogenannten Styrolacrylate erfreuen sich großer Beliebtheit und stellen die größte Gruppe der in der Bundesrepublik Deutschland eingesetzten Kunststoffdispersionen dar. Sie sind meist feinteilig und haben ein hohes Pigmentbindevermögen.

Die Polyacrylate werden als sogenannte Reinacrylate mit z.B. Methacrylsäure copolymerisiert. Mit ihnen lassen sich, besonders bei niedriger PVK, glänzende Dispersionslacke herstellen.

Die erfindungsgemäßen Dispersionsfarben können neben Zeolith X die folgenden Pigmente und Füllstoffe enthalten:

Füllstoffe

Calciumcarbonat (natürlich; gefällt)
Talkum
Kaolin
Glimmer
Bariumsulfat (natürlich; gefällt)
Calciummagnesiumsilikat

Pigmente

Titandioxid
Zinksulfidpigmente z.B. Lithopone
Buntpigmente (anorganisch; organisch)

Durch den erfindungsgemäßen Einsatz von Zeolith X ergeben sich die folgenden Vorteile:

Durch die teilweise Substitution von mineralischen Füllstoffen wie z.B. China Clays, Kaolin und Calciumcarbonaten kann eine Verbesserung des Deckvermögens erreicht werden. Diese Verbesserung geschieht ohne Beeinträchtigung der lacktechnischen Eigenschaften wie z.B. Viskosität, Scheuerfestigkeit und Rißbildungstendenz (Rezepturbeispiele 1 - 7).

Die Einsatzmenge an Zeolith X kann 2 - 15 %, vorzugsweise 3 - 10 %, bezogen auf die Gesamtrezeptur, betragen.

Außer der Substitution von Füllstoffen kann auch ein teilweiser Austausch von Titandioxid durch Zeolith X erfolgen, ohne daß das Deckvermögen beeinträchtigt wird (Rezepturbeispiele 8 und 9).

Beim Austausch von Titandioxid ist ein deutlicher kommerzieller Vorteil gegeben.

**Beispiel**

Zur Formulierung einer Dispersionsfarbe sind über Kunststoffdispersion, Pigment und Füllstoffe hinaus noch weitere Komponenten, wie Wasser, Verdickungsmittel, Netzmittel, Entschäumer, Fungizid und Filmbildehilfsmittel, erforderlich.

Rezepturbeispiele für Dispersionsfarben für Innen- und Außenanstriche unter Einsatz von Wessalith XD (Zeolith X) und die entsprechenden Prüfergebnisse sind in den Tabellen 1 bis 6 aufgeführt.

|  | 1 | 2 |
|---|---|---|
| Wasser | 12,1 | 12,1 |
| Tylose MH 2000 K, 2%ig | 15,0 | 15,0 |
| Pigmentverteiler A | 0,2 | 0,2 |
| Calgon N, 10 %ig | 1,0 | 1,0 |
| Agitan 280 | 0,2 | 0,2 |
| Mergal K6N | 0,3 | 0,3 |
| Butyldiglykolacetat | 2,0 | 2,0 |
| Ammoniak | 0,2 | 0,2 |
| Wessalith XD | 5,0 | --- |
| Zeolex 323 | --- | 5,0 |
| Titandioxid 2056 | 15,0 | 15,0 |
| Kaolin | 6,0 | 6,0 |
| EWO-Pulver | 10,0 | 10,0 |
| Talkum AT extra | 5,0 | 5,0 |
| Mowilith DM 22 | 28,0 | 28,0 |
|  | 100,0 | 100,0 |

Wessalith XD ist ein pulverförmiger Na-X-Zeolith mit der Summenformel

$$Na_{86}(AlO_2)_{86}(SiO_2)_{106}\ 264H_2O.$$

Der Anteil des Kristallwassers beträgt nach dieser Formel 26 %. Ausgehend von einem Kubooktaeder, dessen Eckpunkte jeweils abwechselnd mit $SiO_2$ und $AlO_4$-Tetraedern besetzt sind, gelangt man zu einem aus Vier und Sechsringen zusammengesetzten Alumosilikatgrundgerüst, das als „β-Käfig" bezeichnet wird. Das Basiselement dieser Zeolithstruktur ist ein Oktaeder, dessen Ecken abgeschnitten sind.

Tabelle 1

| Rezepturbeispiele für Dispersionsfarben für Innenanstriche mit unterschiedlichen Einsatzmengen an Wessalith XD (Zeolith X) anstelle von Calciumcarbonat | | | | |
|---|---|---|---|---|
| | Angaben in Gew.-% | | | |
| Beispiel Nr. | 1 | 2 | 3 | 4 |
| Wasser | 15,5 | 15,5 | 15,5 | 15,5 |
| Verdicker (Methylcellulose), 2 %ig | 15,0 | 15,0 | 15,0 | 15,0 |
| Dispergiermittel (Na-polyphosphat), 10 %ig | 0,7 | 0,7 | 0,7 | 0,7 |
| Dispergiermittel (Na-polyacrylat) | 0,2 | 0,2 | 0,2 | 0,2 |
| Entschäumer (KWS, hydrophobe Kieselsäure) | 0,4 | 0,4 | 0,4 | 0,4 |
| Konservierungsmittel (Thiazol-Derivate) | 0,1 | 0,1 | 0,1 | 0,1 |
| Titandioixd (94% $TiO_2$-Gehalt, stabilisiert mit Al + Zr) | 10,0 | 10,0 | 10,0 | 10,0 |
| Talkum (Talk + Chlorit) | 7,0 | 7,0 | 7,0 | 7,0 |
| Dolomithaltiger Talk | 3,0 | 3,0 | 3,0 | 3,0 |
| Calciumcarbonat (Marmor, metamorph) sehr fein | 7,0 | 7,0 | 7,0 | 7,0 |
| **Calciumcarbonat** (Marmor, metamorph) fein | 25,0 | 20,0 | 15,0 | 10,0 |
| **Wessalith XD** (Zeolith X) | --- | 5,0 | 10,0 | 15,0 |
| Verdicker (Diurethan) | 0,1 | 0,1 | 0,1 | 0,1 |
| Copolymerisat-Dispersion aus Vinylacetat und Ethylen | 16,0 | 16,0 | 16,0 | 16,0 |
| | 100,0 | 100,0 | 100,0 | 100,0 |

Tabelle 2

Anwendungstechnische Prüfergebnisse der nach den Beispielen 1 - 4 hergestellten
Innendispersionsfarben im Hinblick auf ihre Dispergierbarkeit, Viskosität, optische Eigenschaften
und Tendenz zur Rißbildung

| geprüfte Dispersions-farbe, herge-stellt gemäß Beispiel Nr. | Grindo-meterwert (µm) | Viskosität bei 6 Upm (mPa s) | Viskosität bei 60 Upm (mPa s) | Thixotropie -Index | Glanz 85°-Reflekto-meterwert | Weißgrad nach Berger | Kontrast-verhältnis (%) | Weißgrad u. Deckvermögen (visuell) | Tendenz zur Rißbildung (450 µm Trockenfilm) |
|---|---|---|---|---|---|---|---|---|---|
| 1 | 50 | 26000 | 4640 | 5,6 | 2,0 | 71,9 | 97,0 | Bezug | gering |
| 2 | 51 | 30700 | 5160 | 5,9 | 2,2 | 73,3 | 97,9 | deutlich besser | gering |
| 3 | 52 | 37200 | 6300 | 5,9 | 2,7 | 74,1 | 98,1 | wesentlich besser | gering |
| 4 | 53 | 48300 | 8170 | 5,9 | 3,3 | 75,1 | 98,4 | wesentlich besser | gering |

Tabelle 3

| Rezepturbeispiel für eine Dispersionsfarbe für Außenanstriche, Austausch von China Clay (Kaolin) durch Wessalith XD (Zeolith X) | | | |
|---|---|---|---|
| | Angaben in Gew.-% | | |
| Beispiel Nr. | 5 | 6 | 7 |
| Wasser | 12,1 | 12,1 | 12,1 |
| Verdicker (Methylcellulose), 2 %ig | 15,0 | 15,0 | 15,0 |
| Dispergiermittel (Na-polyphosphat), 10 %ig | 1,0 | 1,0 | 1,0 |
| Dispergiermittel (Ammoniumsalz einer Polyacrylsäure) | 0,2 | 0,2 | 0,2 |
| Entschäumer (KWS, hydrophobe Kieselsäure) | 0,2 | 0,2 | 0,2 |
| Konservierungsmittel (N-Methylol-Chloracetamid) | 0,3 | 0,3 | 0,3 |
| Filmbildehilfsmittel (Butyldiglykolacetat) | 2,0 | 2,0 | 2,0 |
| Ammoniak, 25 %ig | 0,2 | 0,2 | 0,2 |
| Synthetisches Aluminiumsilikat | 5,0 | 5,0 | 5,0 |
| Titandioxid (94 % $TiO_2$-Gehalt, stabilisiert mit Al + Si) | 15,0 | 15,0 | 15,0 |
| **Wessalith XD** (Zeolith X) | 6,0 | --- | --- |
| **China Clay** (mit hohem Kaolinitanteil) | --- | 6,0 | --- |
| **Calciniertes Kaolin** | --- | --- | 6,0 |
| Natürliches Bariumsulfat | 10,0 | 10,0 | 10,0 |
| Microtalkum, magnesiumhaltig | 5,0 | 5,0 | 5,0 |
| Copolymerisat - Dispersion aus Vinylacetat und Acrylsäureester | 28,0 | 28,0 | 28,0 |
| | 100,0 | 100,0 | 100,0 |

Tabelle 4

Anwendungstechnische Prüfergebnisse der nach den Beispielen 5 - 7 hergestellten Außendispersionsfarben im Hinblick auf ihre Dispergierbarkeit, Viskosität und optische Eigenschaften

| geprüfte Dispersionsfarbe, hergestellt gemäß Beispiel Nr. | Grindo-meterwert (µm) | Viskosität bei 6 Upm (mPa s) | Viskosität bei 60 Upm (mPa s) | Thixotropie-Index | Glanz 85°-Reflekto-meterwert | Weißgrad u. Deckvermögen (visuell) |
|---|---|---|---|---|---|---|
| 5 | 38 | 17000 | 2970 | 5,7 | 4,8 | Bezug |
| 6 | 38 | 28000 | 4780 | 5,9 | 3,9 | deutlich schlechter |
| 7 | 38 | 17200 | 3100 | 5,5 | 4,0 | etwas schlechter |

EP 0 838 505 A1

Tabelle 5

| Rezepturbeispiele für Dispersionsfarben für Innenanstriche, bei der ein teilweiser Austausch von Titandioxid durch Wessalith XD (Zeolith X) vorgenommen wurde | | |
|---|---|---|
| | Angaben in Gew.-% | |
| Beispiel Nr. | 8 | 9 |
| Wasser | 15,5 | 15,5 |
| Verdicker (Carboxymethylcellulose, 2 %ig) | 15,0 | 15,0 |
| Dispergiermittel (Na-polyphosphat), 10 %ig | 0,7 | 0,7 |
| Dispergiermittel (Na-polyacrylat) | 0,2 | 0,2 |
| Entschäumer (KWS, hydrophobe Kieselsäure) | 0,4 | 0,4 |
| Konservierungsmittel (Thiazol-Derivate) | 0,1 | 0,1 |
| **Titandioxid** (94% TiO$_2$-Gehalt, stabilisiert mit Al + Zr) | 10,0 | 7,0 |
| **Wessalith XD** (Zeolith X) | --- | 3,0 |
| Talkum (Talk + Chlorit) | 7,0 | 7,0 |
| Dolomithaltiger Talk | 3,0 | 3,0 |
| Calciumcarbonat (Marmor, metamorph) sehr fein | 7,0 | 7,0 |
| Calciumcarbonat (Marmor, methamorph) fein | 25,0 | 25,0 |
| Verdickungsmittel (Diurethan) | 0,1 | 0,1 |
| Copolymerisat-Dispersion aus Vinylacetat und Ethylen | 16,0 | 16,0 |
| | 100,0 | 100,0 |

Tabelle 6

Anwendungstechnische Prüfergebnisse der nach den Beispielen 8 - 9 hergestellten Innendispersionsfarben im Hinblick auf ihre Dispergierbarkeit, Viskosität, optische Eigenschaften und Scheuerbeständigkeit

| geprüfte Dispersionsfarbe, hergestellt gemäß Beispiel Nr. | Grindo-meterwert (µm) | Viskosität bei 6 Upm (mPa s) | Viskosität bei 60 Upm (mPa s) | Thixotro-pie-Index | Glanz 85°-Reflekto-meterwert | Weißgrad nach Berger | Kontrast-verhältnis (%) | Weißgrad u. Deck-vermögen (visuell) | Scheuerbe-ständigkeit (Anzahl der Zyklen) |
|---|---|---|---|---|---|---|---|---|---|
| 8 | 50 | 40100 | 7330 | 5,5 | 1,8 | 72,1 | 95,4 | Bezug | > 5000 |
| 9 | 51 | 42000 | 8000 | 5,3 | 2,0 | 72,6 | 95,1 | gleich | > 5000 |

Die Prüfung der Dispersionsfarben erfolgt wie nachstehend beschrieben:

## 1. Dispergierbarkeit (Körnigkeit, Grindometerwert)

Zur Prüfung der Dispergierbarkeit (Körnigkeit, Grindometerwert) nach DIN 53 203 wird die Dispersionsfarbe mit 10 - 15 % Wasser verdünnt. Unter der Körnigkeit wird nach dieser Norm das unter den festgelegten Bedingungen ermittelte, die Korngröße kennzeichnende und durch die Keilschichtdicke gegebene Maß verstanden, unterhalb dessen eine größere Anzahl von Pigment- (Füllstoff-)körnern auf der Oberfläche der ausgestrichenen Probe sichtbar wird.

## 2. Viskosität

Die Viskosität (angegeben in Pa • s) ist ein Maß für den Fließwiderstand einer Flüssigkeit bei laminarem Fließen und wird definiert als Quotient aus Schubspannung und Schergeschwindigkeit.

Da sowohl die Herstellung als auch die Lagerstabilität und die anwendungstechnischen Eigenschaften eines Anstrichstoffes vom rheologischen Verhalten beeinflußt werden, ist die Viskosität ein wichtiges Kriterium zu seiner Beurteilung. Die Viskosität der Dispersionsfarben wurde nach 24-stündiger Lagerung bei 23 °C mit dem Brookfield-Viskosimeter LVT, Modell DV-II bei 6 und bei 60 Upm gemessen und anschließend der Thixotropie-Index ermittelt.

## 3. Messung des Weißgrades

Der Weißgrad wird an einer deckenden Schicht gemessen, die bei einer Spalthöhe von 400 $\mu$m erreicht wird.

Die Dispersionsfarbe wird nach gründlichem Aufrühren mit ca. 15 - 20 Gew.-% Wasser verdünnt und durch ein Nylonsieb, 150 um Maschenweite, gesiebt. Mit einem Filmaufziehrahmen wird die Farbe auf weißen Glanzkarten (21 x 14,5 cm) aufgezogen.

Nach dem Trocknen der Farbe wird im mittleren Bereich des Anstriches eine 3-fache Messung entsprechend DIN 53 778, Teil 3, durchgeführt. Es wird der Weißgrad nach Berger angegeben.

## 4. Beurteilung des Deckvermögens

Zwei zu vergleichende Dispersionsfarben werden gut aufgerührt, mit ca. 15 - 20 Gew.-% Wasser verdünnt und durch ein Nylonsieb, 150 $\mu$m Maschenweite, gesiebt. Mit einem Doppelfilmziehrahmen, Spalthöhe 200 $\mu$m, werden die Farben mittels eines elektromotorischen Filmziehgerätes auf weiße Prüfkarten mit 4 schwarzen Balken nebeneinander aufgezogen. Nach dem Trocknen der Farben wird das Deckvermögen visuell vergleichend bewertet.

Zur Bestätigung des visuellen Eindrucks wird an den Farben des weiteren das Kontrastverhältnis (KV) ermittelt. Zu diesem Zweck wird die Farbe auf je zur Hälfte schwarze und weiße Prüfkarten aufgetragen und über beiden Untergründen der Normfarbwert Y gemessen. Die Auswertung wird nach folgender Formel vorgenommen:

$$\text{Kontrastverhältnis} = \frac{Ys}{Yw} \cdot 100$$

## 5. Messung des Reflektometerwertes (Glanz)

Die Dispersionsfarbe wird mit einem 100 $\mu$m Filmziehrahmen auf eine Glasscheibe (Fensterglas) aufgezogen und 24 h bei Raumtemperatur getrocknet.

Die Glanzmessung erfolgt nach DIN 67 530 mit dem Glanzmeßgerät BYK Gardner hazegloss bei einem Meßwinkel von 85 °. An jedem Farbfilm werden drei Messungen durchgeführt.

## 6. Bestimmung der Scheuerbeständigkeit

Die Scheuerbeständigkeit wurde nach DIN 53 778, Teil 2 bestimmt.

## Patentansprüche

**1.** Dispersionsfarbe, dadurch gekennzeichnet, daß sie neben anderen Bestandteilen Zeolith X enthält.

Europäisches
Patentamt

**EUROPÄISCHER RECHERCHENBERICHT**

Nummer der Anmeldung

EP 97 11 8137

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO 87 07884 A (HUBER CORP J M) 30.Dezember 1987 <br> * Seite 48 - Seite 49; Ansprüche 3,15 * <br> --- | 1 | C09D5/02 <br> C09D7/12 |
| X | DATABASE WPI <br> Section Ch, Week 8413 <br> Derwent Publications Ltd., London, GB; <br> Class E37, AN 84-078794 <br> XP002048487 <br> & JP 59 030 864 A (SUMITOMO CHEM CO LTD) , <br> 18.Februar 1984 <br> * Zusammenfassung * <br> --- | 1 | |
| X | DATABASE WPI <br> Section Ch, Week 7949 <br> Derwent Publications Ltd., London, GB; <br> Class A82, AN 79-88508B <br> XP002048488 <br> & JP 54 139 640 A (TOYO SODA MFG CO LTD) , <br> 30.Oktober 1979 <br> * Zusammenfassung * <br> ----- | 1 | |

**RECHERCHIERTE SACHGEBIETE (Int.Cl.6)**

C09D

Der vorliegende Recherchenbericht wurde für alle Patentansprüche erstellt

| Recherchenort | Abschlußdatum der Recherche | Prüfer |
|---|---|---|
| DEN HAAG | 28.November 1997 | Miller, A |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
   Dokument

EPO FORM 1503 03.82 (P04C03)